(19) Europäisches Patentamt
European Patent Office
Office européen des brevets

(11) **EP 4 691 611 A1**

(12) **EUROPEAN PATENT APPLICATION**
published in accordance with Art. 153(4) EPC

(43) Date of publication:
**11.02.2026 Bulletin 2026/07**

(21) Application number: 24779324.3

(22) Date of filing: **11.03.2024**

(51) International Patent Classification (IPC):
***B01D 61/36*** (2006.01)   ***B01D 71/02*** (2006.01)

(52) Cooperative Patent Classification (CPC):
**B01D 63/066; B01D 61/36; B01D 71/0281;**
B01D 2311/10; B01D 2311/103; B01D 2311/14

(86) International application number:
**PCT/JP2024/009217**

(87) International publication number:
**WO 2024/203193 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 JP 2023056459**

(71) Applicant: **NGK Insulators, Ltd.**
**Nagoya-shi, Aichi 467-8530 (JP)**

(72) Inventors:
• **KOJIMA, Miyuki**
**Nagoya-shi, Aichi 467-8530 (JP)**

• **SHIMIZU, Katsuya**
**Nagoya-shi, Aichi 467-8530 (JP)**
• **IIDA, Kazuki**
**Nagoya-shi, Aichi 467-8530 (JP)**
• **NAKAGAWA, Kosuke**
**Nagoya-shi, Aichi 467-8530 (JP)**
• **MAEHARA, Sota**
**Nagoya-shi, Aichi 467-8530 (JP)**
• **KAN, Hirofumi**
**Nagoya-shi, Aichi 467-8530 (JP)**

(74) Representative: **Mewburn Ellis LLP**
**Aurora Building**
**Counterslip**
**Bristol BS1 6BX (GB)**

(54) **OPERATION METHOD FOR SEPARATION DEVICE**

(57)   Provided is an operating method for a separation device, which reduces a heat distribution in a separation membrane to enable efficient heating and cooling of the separation membrane on the downstream side. An operating method for a separation device according to an embodiment of the present disclosure is an operating method for a separation device including a separation membrane, the separation device including: a first flow path to which a mixture is to be supplied; and a second flow path through which a substance that has permeated through the separation membrane is allowed to flow. The operating method includes a step of supplying the mixture to the first flow path so that the mixture flowing through the first flow path has an average Reynolds number of less than 2,000.

FIG. 1

EP 4 691 611 A1

**Description**

Technical Field

The present disclosure relates to an operating method for a separation device.

Background Art

There has been known a membrane separation method that uses a separation membrane to separate a specific substance from a mixture. As such a membrane separation method, a separation method using, for example, a zeolite membrane has been proposed (see Non Patent Literature 1). A separation device including a separation membrane sometimes requires heating of the separation membrane at the time of activation of the device so that the separation membrane can fulfill a predetermined function.

Citation List

Non Patent Literature

[NPL 1] Development of Membrane Aided Reactor, Mitsui Zosen Technical Review, February 2003, No. 178, 115-120

Summary of Invention

Technical Problem

A primary object of the present disclosure is to provide an operating method for a separation device, which reduces a heat distribution in a separation membrane to enable efficient heating and cooling of the separation membrane on the downstream side.

Solution to Problem

[1] According to an embodiment of the present disclosure, there is provided an operating method for a separation device, the separation device including a separation membrane. The separation device includes a first flow path and a second flow path. A mixture is to be supplied to the first flow path. A substance that has permeated through the separation membrane is allowed to flow through the second flow path. The operating method for a separation device includes a step of supplying the mixture to the first flow path so that the mixture flowing through the first flow path has an average Reynolds number of less than 2,000.

[2] In the operating method for a separation device according to the above-mentioned item [1], the mixture may contain water.

[3] In the operating method for a separation device according to the above-mentioned item [2], the mixture may contain water and an organic compound.

[4] In the operating method for a separation device according to any one of the above-mentioned items [1] to [3], the separation membrane may be a zeolite membrane.

[5] In the operating method for a separation device according to the above-mentioned item [4], a molar ratio "$SiO_2/Al_2O_3$" in the zeolite membrane may be less than 5.

[6] In the operating method for a separation device according to any one of the above-mentioned items [1] to [5], in the step of supplying the mixture to the first flow path, a temperature of the mixture being supplied and/or a pressure in the first flow path may be increased.

[7] In the operating method for a separation device according to any one of the above-mentioned items [1] to [5], in the step of supplying the mixture to the first flow path, a pressure in the first flow path is decreased, and then a temperature of the mixture being supplied may be decreased.

[8] In the operating method for a separation device according to any one of the above-mentioned items [1] to [7], the operating method for a separation device may be used in a transient operation.

Advantageous Effects of Invention

According to the embodiment of the present disclosure, the operating method for a separation device, which reduces a heat distribution in a separation membrane to enable efficient heating and cooling of the separation membrane on the downstream side, can be achieved.

Brief Description of Drawings

FIG. **1** is a schematic configuration view of a separation membrane complex to be used in an operating method for a separation device according to one embodiment of the present disclosure.

FIG. **2** is a schematic configuration view of a separation membrane and a substrate of FIG. **1.**

FIG. **3** is a schematic configuration view of one modification example of the separation membrane complex.

FIG. **4** is a schematic cross-sectional view of the separation membrane complex of FIG. **3.**

FIG. **5** is a schematic configuration view of another modification example of the separation membrane complex.

FIG. **6** is an explanatory schematic diagram for illustrating an operating method for a separation device according to one embodiment of the present disclosure.

Description of Embodiments

Embodiments of the present disclosure are described below with reference to the drawings, but the present disclosure is not limited to those embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present disclosure.

A. Outline of Operating Method for Separation Device

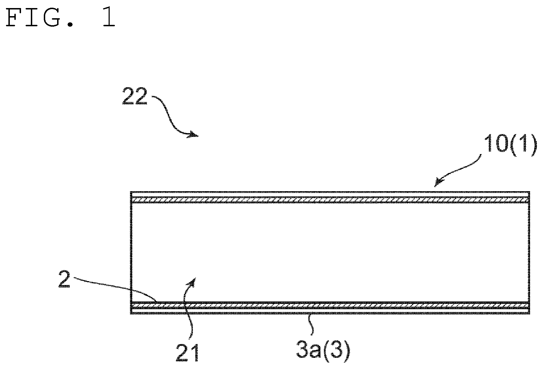

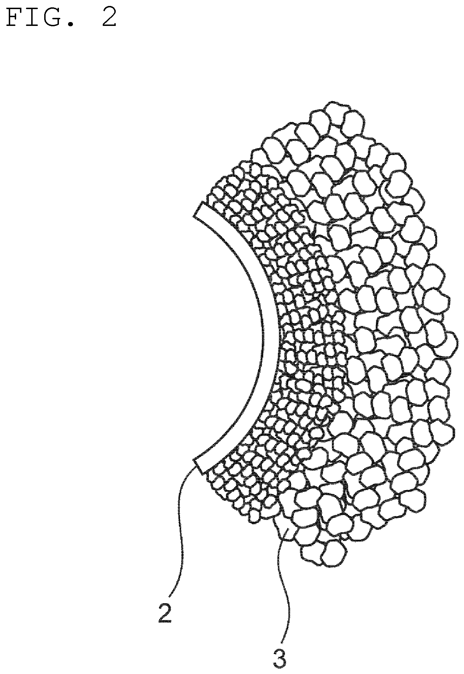

FIG. **1** is a schematic configuration view of a separation membrane complex to be used in an operating method for a separation device according to one embodiment of the present disclosure, and FIG. **2** is a schematic configuration view of a separation membrane and a substrate of FIG. **1.**
The operating method for a separation device according to one embodiment of the present disclosure is an operating method (including an operation starting method and/or an operation stopping method) for a separation device **1** including a separation membrane **2.** The separation device **1** has a first flow path **21** and a second flow path **22.** A mixture is to be supplied to the first flow path **21.** A substance that has permeated through the separation membrane **2** is allowed to flow through the second flow path **22.** The operating method for the separation device **1** as described above includes a step of supplying the mixture to the first flow path **21** so that the mixture flowing through the first flow path **21** has an average Reynolds number of, for example, less than 2,000. That is, the mixture typically passes through the first flow path **21** in the form of a laminar flow.
The average Reynolds number of the mixture flowing through the first flow path **21** is preferably 1,600 or less. When the average Reynolds number is set to 1,600 or less, costs can be reduced without requiring excessively high accuracy for a measurement device.
When the average Reynolds number of the mixture is equal to or less than the above-mentioned upper limit, the mixture is allowed to pass through the first flow path in the form of a laminar flow. Thus, the mixing of the mixture can be suppressed, and heat exchange with the separation membrane is less liable to occur. As a result, a gas can maintain a high temperature to the downstream side, thus enabling heating of the separation membrane all the way to the downstream side. Thus, efficient heat exchange between the mixture flowing through the first flow path and the separation membrane is enabled all the way to the latter part of the first flow path. As a result, a heat distribution in the separation membrane can be sufficiently reduced, enabling efficient heating and cooling of the separation membrane on the downstream side. The lower limit of the average Reynolds number of the mixture flowing through the first flow path is typically 400. However, the lower limit is not limited to 400 as long as the zero cut (low cut) flow rate of a flowmeter or the surging of a blower does not have an adverse effect.

The phrase "the average Reynolds number of the mixture flowing through the first flow path" as used herein refers to the average value of a Reynolds number (Re) of the mixture at an upstream end portion (inlet) of the first flow path and a Reynolds number (Re) of the mixture at a downstream end portion (outlet) of the first flow path. The Reynolds number Re of the mixture is calculated based on the following Formula (1).

$$Re=(\rho \times v \times L)/\mu \qquad (1)$$

(In Formula (1), $\rho$ represents the density [in kg/m$^3$ as unit] of the mixture; "v" represents the flow rate [in m/s as unit] of the mixture; L represents the characteristic length [in "m" as unit] of the first flow path; and $\mu$ represents the viscosity coefficient [in Pa·s as unit] of the mixture. The characteristic length of the first flow path is, for example, the inner diameter of the first flow path.

The viscosity coefficient of the mixture can be calculated by, for example, a measurement method described in JIS Z 8803 or an estimation method based on the kinetic theory of gases.

In one embodiment, the Reynolds number of the mixture flowing between the upstream end portion (inlet) and the downstream end portion (outlet) of the first flow path **21** is, for example, less than 2,000, preferably 1,600 or less, and is for example, 400 or more. When the Reynolds number of the mixture flowing between the upstream end portion (inlet) and the downstream end portion (outlet) of the first flow path is equal to or less than the above-mentioned upper limit, the heat distribution in the separation membrane can be stably reduced.

The separation membrane **2** separates a substance to be separated, which is contained in the mixture passing through the first flow path **21**. The separation membrane **2** may allow the substance to be separated to permeate therethrough and to flow into the second flow path **22**. When the mixture containing the substance to be separated passes through the first flow path in a steady operation that is performed after the completion of a process of starting the operation of the separation device, the content rate of the substance to be separated in a fluid that has passed through the first flow path **21** (mixture in which the substance to be separated has been reduced) is lower than the content rate of the substance to be separated in the mixture before being supplied to the first flow path **21**.

The length of the first flow path **21** is, for example, from 5 cm to 150 cm, preferably from 15 cm to 100 cm.

In one embodiment, the substance to be separated is an adsorptive material to be adsorbed to the separation membrane **2**.

The adsorptive substance to be adsorbed to the separation membrane **2** refers to a substance satisfying the following Formula (2).

$$|B-A|/A \times 100 > 0 \qquad (2)$$

(In Formula (2), A represents the volume of the separation member per unit mass at the time when the separation membrane is exposed under atmosphere at a relative pressure "P/P*" of 0 and room temperature (23°C) until reaching an equilibrium state (for example, for one hour); and B represents the volume of the separation member per unit mass at the time when the separation membrane is exposed under an adsorptive substance atmosphere at a relative pressure "P/P*" of 0.5 and room temperature (23°C) until reaching an equilibrium state (for example, for one hour), in which P represents the pressure of the adsorptive substance in the above-mentioned atmosphere, and P* represents the saturation water vapor pressure of the adsorptive substance under room temperature.)

A calculation method for the volume of the separation membrane per unit mass is not limited to any particular method. The volume of the separation membrane per unit mass is obtained by, for example, preparing a sample of the same material as that of the separation membrane and measuring the density of the sample under the adsorptive substance atmosphere. When the separation membrane is made of, in particular, a crystalline substance, the volume of the separation membrane per unit mass is obtained by measuring a unit cell volume under the adsorptive substance atmosphere with X-ray diffractometry or the like.

The adsorptive substance preferably satisfies the following Formula (3), more preferably satisfies the following Formula (4), still more preferably satisfies the following Formula (5).

$$|B-A|/A \times 100 \geq 0.3 \qquad (3)$$

$$(B-A)/A\times100>0 \qquad (4)$$

$$(B-A)/A\times100>0.3 \qquad (5)$$

(In Formulae (3) to (5), A and B are the same as A and B in Formula (2).)

The mixture (supply gas) may contain one kind of adsorptive substance or two or more kinds of adsorptive substances. In the latter case, it is preferred that the plurality of adsorptive substances include any one or more kinds of adsorptive substances satisfying Formula (3).

Specific examples of the adsorptive substance include water, $CO_2$, $NH_3$, and primary alcohols.

The mixture supplied to the first flow path **21** may contain, in addition to the above-mentioned adsorptive substance, a non-adsorptive substance that does not correspond to an adsorptive substance. That is, the non-adsorptive substance is, for example, a substance that does not satisfy Formula (2) (that is, $|B-A|/A\times100\approx0$), a substance that does not satisfy Formula (3) (that is, $|B-A|/A\times100<0.3$), a substance that does not satisfy Formula (4) (that is, $(B-A)/A\times100\leq0$), or a substance that does not satisfy Formula (5) (that is, $(B-A)/A\times100\leq0.3$). In terms of significant digits, $|B-A|/A\times100\approx0$ includes a case in which $|B-A|/A\times100$ is less than 0.01.

The non-adsorptive substance passes through the first flow path **21** without being substantially adsorbed to the separation membrane **2**. Thus, when the mixture containing the adsorptive substance and the non-adsorptive substance passes through the first flow path in the steady operation that is performed after the completion of the process of starting the operation of the separation device, the content rate of the non-adsorptive substance in the fluid that has passed through the first flow path **21** (mixture in which the adsorptive substance has been reduced) is higher than the content rate of the non-adsorptive substance in the mixture before being supplied to the first flow path **21**.

In one embodiment, the mixture contains water. Water can typically permeate through the separation membrane **2** and thus flows into the second flow path **22**.

Typical examples of the substance to be contained in the mixture include an organic compound. In one embodiment, the mixture supplied to the first flow path **21** is a water-containing organic compound containing: water; and an organic compound.

Examples of the organic compound include: alcohols, such as methanol, ethanol, and isopropanol; ketones, such as acetone and methyl ethyl ketone; carboxylic acids, such as formic acid, acetic acid, butyric acid, propionic acid, and benzoic acid; aromatic hydrocarbons, such as toluene and benzene; phenols such as phenol; aldehydes; ethers; esters; amines; nitriles; straight-chain hydrocarbons; branched-chain saturated hydrocarbons; cyclic saturated hydrocarbons; chain unsaturated hydrocarbons; nitrogen-containing compounds; sulfur-containing compounds; and halogen derivatives of hydrocarbons. The organic compound may be contained alone in the mixture, or the combination of two or more kinds of organic compounds may be contained in the mixture.

Further, the mixture is not limited to any particular one, and may contain, in addition to the above-mentioned substance, a sweep gas. Examples of the sweep gas include a nitrogen gas and air. The sweep gases can be used alone or in combination.

The mixture as described above may be gas or liquid when supplied to the first flow path **21**. Further, the mixture may be a mixture of gas and liquid. The mixture is preferably supplied in a gaseous state to the first flow path **21**.

The temperature of the mixture supplied to the first flow path **21** is, for example, from 100°C to 350°C. A pressure (gauge pressure) in the first flow path **21** is, for example, from 0.1 MPaG to 20 MPaG.

Further, at least a substance that has permeated through the separation membrane **2** (hereinafter also referred to as "permeate substance") flows through the second flow path **22**. Examples of the permeate substance include the substance and the sweep gas, which have been described above. In addition to the permeate substance, the sweep gas may flow through the second flow path **22**.

A pressure (gauge pressure) in the second flow path **22** is, for example, from -0.1 MPaG to 0.1 MPaG, preferably -0.09 MPaG or less. When the pressure in the second flow path **22** is a negative pressure, only the permeate substance can be caused to smoothly flow through the second flow path without the sweep gas.

Now, the details of the separation device are described.

B. Separation Device

B-1. Separation Membrane Complex

As illustrated in FIG. **1,** the separation device **1** typically includes the separation membrane complex **10** including: the substrate **3;** and the separation membrane **2**. Although not shown, the separation membrane complex **10** is housed in any appropriate case for use. The separation membrane complex **10** typically extends in the same direction as the direction in which the first flow path extends. The length of the separation membrane complex **10** may be appropriately and suitably adjusted.

B-1-1. Substrate

The substrate **3** supports the separation membrane **2.** In one embodiment, the substrate **3** is a porous substrate. The porous substrate has, for example, a monolith-type structure including: a framework being continuous in a three-dimensional network pattern; and communication holes defined by the framework.

The porous substrate may be formed of any appropriate material. Typical examples of a material for the porous substrate include a ceramic sintered body. Examples of the ceramic sintered body include alumina, silica, mullite, zirconia, titania, yttria, silicon nitride, silicon carbide, and cordierite. The ceramic sintered bodies can be used alone or in combination. A preferred one of the ceramic sintered bodies is alumina.

The porous substrate may contain an inorganic binding material. Examples of the inorganic binding material include titania, mullite, easily sinterable alumina, silica, glass frit, clay mineral, and easily sinterable cordierite. The inorganic binding materials can be used alone or in combination.

The porous substrate may be made up of a single layer or may have a multilayer structure in which multiple layers are stacked. In one embodiment, as illustrated in FIG. **2,** the porous substrate has a multilayer structure including a plurality of layers being different in pore diameter. In this case, it is preferred that the pore diameter of the layer closer to the separation membrane **2** be smaller.

The average pore diameter of the porous substrate is, for example, from 0.01 $\mu$m to 70 $\mu$m, preferably from 0.05 $\mu$m to 25 $\mu$m. The average pore diameter of the porous substrate on the separation membrane side is from 0.01 $\mu$m to 1 $\mu$m, preferably from 0.05 $\mu$m to 0.5 $\mu$m. With regard to the distribution of the pore diameters in the whole including the surface and inside of the porous substrate, D5 is, for example, from 0.01 $\mu$m to 50 $\mu$m, D50 is, for example, from 0.05 $\mu$m to 70 $\mu$m, and D95 is, for example, from 0.1 $\mu$m to 2,000 $\mu$m. The porosity of the porous substrate on the separation membrane side is, for example, from 25% to 50%. The average pore diameter of the porous substrate may be measured with, for example, a mercury porosimeter, a perm porometer, or a nano-perm porometer.

As illustrated in FIG. **1,** the substrate **3** typically separates the first flow path **21** and the second flow path **22** from each other. The substrate **3** may have any appropriate shape. Examples of the shape of the substrate **3** include a cylindrical shape, a honeycomb shape, and a plate-like shape.

In one embodiment, the substrate **3** is a cylindrical substrate **3a.** Examples of the sectional shape of the cylindrical substrate **3a** in the direction orthogonal to the length direction of the cylindrical substrate **3a** include a triangular shape, a rectangular shape, a pentagonal shape, a polygonal shape having six or more sides, a circular shape, and an elliptical shape, and a preferred one is a circular shape. The outer diameter and the length of the cylindrical substrate may be appropriately set in accordance with its purpose.

In this embodiment, the internal space of the cylindrical substrate **3a** (space defined by the inner peripheral surface of the cylindrical substrate) includes any one of the first flow path **21** or the second flow path **22,** and the external space of the cylindrical substrate **3a** (space outside the outer peripheral surface of the cylindrical substrate) includes another one of the first flow path **21** or the second flow path **22.** In the illustrated example, the internal space of the cylindrical substrate **3a** includes the first flow path **21,** and the external space of the cylindrical substrate **3a** includes the second flow path **22.**

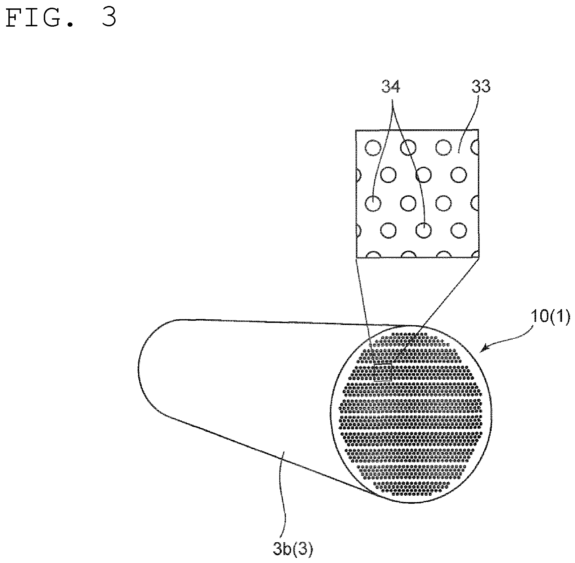

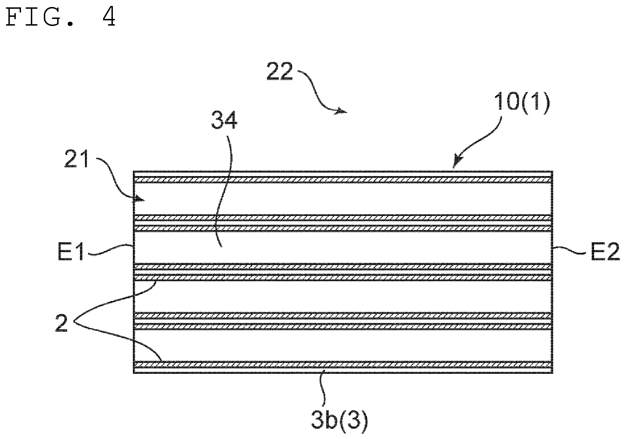

In another embodiment, as illustrated in FIG. **3** and FIG. **4,** the substrate **3** is a honeycomb-shaped substrate **3b.** The honeycomb-shaped substrate **3b** includes a partition wall **33** that defines a plurality of cells **34.** The cells **34** are each formed in a cylindrical shape so as to penetrate the honeycomb-shaped substrate **3b** in its longitudinal direction.

The cells **34** extend from a first end surface **E1** (inflow end surface) to a second end surface **E2** (outflow end surface) of the honeycomb-shaped substrate **3b** in the longitudinal direction (axial direction) of the honeycomb-shaped substrate **3b** (see FIG. **4**). The cells **34** each have any appropriate shape in cross section taken in the direction orthogonal to the length direction of the honeycomb-shaped substrate **3b.** Examples of the sectional shape of the cell include a triangular shape, a rectangular shape, a pentagonal shape, a polygonal shape having six or more sides, a circular shape, and an elliptical shape. The sectional shape and the size of the cell may be the same for all the cells or may be different for at least some of the cells. A preferred one of the above-mentioned sectional shapes of the cell is a circular shape.

The distance between the central axes of the plurality of cells **34** is, for example, from 0.3 mm to 20 mm. A cell density (that is, the number of cells **34** per unit area) in cross section taken in the direction orthogonal to the length direction of the honeycomb-shaped substrate may be appropriately set in accordance with its purpose. The cell density may be, for example, from 0.5 cell/cm$^2$ to 320 cells/cm$^2$. When the cell density falls within such a range, sufficient strength and effective geometric surface area (GSA) of the honeycomb-shaped substrate can be ensured.

The honeycomb-shaped substrate **3b** has any appropriate shape (overall shape). Examples of the honeycomb-shaped substrate include a columnar shape with a circular bottom surface, an elliptical cylindrical shape with an elliptical bottom surface, a prism shape with a polygonal bottom surface, and a pillar shape with an indefinite bottom surface. The honeycomb-shaped substrate **3b** of the illustrated example has a columnar shape. The outer diameter and the length of the honeycomb-shaped substrate may be appropriately set in accordance with its purpose.

In this embodiment, the internal space of each of the plurality of cells **34** (space defined by the inner peripheral surface of the cell) includes any one of the first flow path **21** or the second flow path **22,** and the external space of the honeycomb-shaped substrate **3b** (space outside the outer peripheral surface of the honeycomb-shaped substrate) includes another one of the first flow path **21** or the second flow path **22**. In the illustrated example, the internal space of the cell **34** includes the first flow path **21,** and the external space of the honeycomb-shaped substrate **3b** includes the second flow path **22**.

B-1-2. Separation Membrane

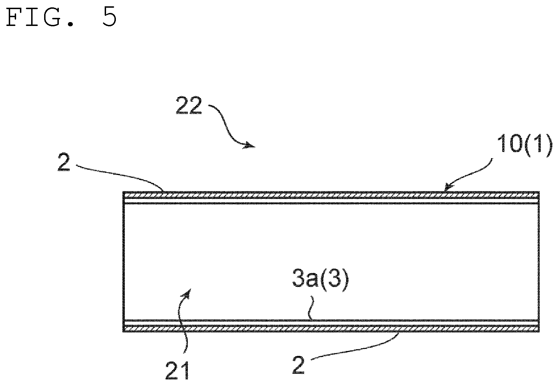

The separation membrane **2** is typically directly provided on the surface of the substrate **3**. The separation membrane **2** may face the first flow path **21** (see FIG. **1** and FIG. **4)** or may face the second flow path **22** (see FIG. **5)**. When the separation membrane faces the first flow path, a substance to be separated, which is contained in a mixture passing through the first flow path, comes into direct contact with the separation membrane. Thus, the separation membrane can efficiently separate the substance to be separated. When the separation membrane faces the second flow path, the substance to be separated, which is contained in the mixture passing through the first flow path, permeates through the substrate to reach the separation membrane. Also with this arrangement, the separation membrane can separate the substance to be separated.

In one embodiment, the separation membrane **2** faces the first flow path **21**.

In FIG. **1,** the substrate **3** is the cylindrical substrate **3a**. The separation membrane **2** is formed on the inner surface of the cylindrical substrate **3a**. In the illustrated example, the first flow path **21** is defined in a portion (typically, the central portion) of the separation membrane complex **10,** in which the separation membrane **2** is absent, in cross section.

Further, in FIG. **4,** the substrate **3** is the honeycomb-shaped substrate **3b**. The separation membrane **2** is formed on the inner surface of each of the plurality of cells **34**. The first flow path **21** is defined in a portion (typically, the central portion) of the cell **34,** in which the separation membrane **2** is absent, in cross section.

As in the illustrated example, the separation membrane **2** may be formed entirely on the inner surface of the cylindrical substrate **3a** or the inner surface of the cell **34** (that is, so as to surround the first flow path **21)** or may be formed partially on the inner surface of the cylindrical substrate **3a** or the inner surface of the cell **34**. The separation membrane that is formed so as to surround the first flow path can improve separation efficiency for the substance to be separated.

The separation membrane **2** typically has fine pores. The separation membrane **2** allows a specific substance to permeate therethrough and to be separated from the mixture by using, for example, a difference in molecular size and/or a difference in adsorptivity.

The separation membrane **2** may be formed of any appropriate material. Examples of the material for the separation membrane **2** include zeolite, silica, and carbon. The materials for the separation membrane **2** can be used alone or in combination.

When the mixture contains water, a preferred example of the material for the separation membrane **2** is zeolite. In one embodiment, the separation membrane **2** is a zeolite membrane.

The zeolite membrane includes a membrane formed from zeolite on the surface of the substrate. The zeolite membrane may contain two or more kinds of zeolites different from each other in structure or composition.

Examples of the zeolite for forming the zeolite membrane include: zeolite in which an atom (T atom) positioned on the center of an oxygen tetrahedron ($TO_4$) for forming the zeolite is formed of only Si, or Si and Al; AlPO-type zeolite in which the T atom is formed of Al and P; SAPO-type zeolite in which the T atom is formed of Si, Al, and P; MAPSO-type zeolite in which the T atom is formed of magnesium (Mg), Si, Al, and P; and ZnAPSO-type zeolite in which the T atom is formed of zinc (Zn), Si, Al, and P. Part of the T atom may be substituted with any other element.

Examples of the zeolite include AEI-type, AEN-type, AFN-type, AFV-type, AFX-type, BEA-type, CHA-type, DDR-type, ERI-type, ETL-type, FAU-type (X-type or Y-type), GIS-type, LEV-type, LTA-type, MEL-type, MFI-type, MOR-type, PAU-type, RHO-type, SAT-type, and SOD-type zeolites.

Of those zeolites, a LTA-type zeolite is preferred.

The maximum number of ring members of the zeolite is, for example, 12 or less, preferably 10 or less, more preferably 8 or less, and is, for example, 6 or more.

The zeolite film contains $SiO_2$ and $Al_2O_3$. The zeolite film may further contain an alkali metal. The alkali metal is, for example, sodium (Na) or potassium (K).

The molar ratio "$SiO_2/Al_2O_3$" in the zeolite film is, for example, 100 or less, preferably 10 or less, more preferably less than 5, still more preferably 4 or less. When the molar ratio "$SiO_2/Al_2O_3$" in the zeolite film is equal to or less than the above-mentioned upper limits, breakage of the zeolite film can be further stably suppressed. The lower limit of the molar ratio "$SiO_2/Al_2O_3$" in the zeolite film is typically 2. The molar ratio "$SiO_2/Al_2O_3$" may be measured by, for example, scanning electron microscopy-energy-dispersive X-ray spectroscopy (SEM-EDX; X-ray accelerating voltage: 10 kV).

The average pore diameter of the separation membrane **2** can be appropriately and suitably selected in accordance with the substance to be separated. The average pore diameter of the separation membrane **2** is, for example, from 0.2 nm to 1 nm, preferably from 0.3 nm to 0.5 nm. A separation membrane **2** having a smaller average pore diameter has higher selectivity. The average pore diameter of the separation membrane **2** is smaller than the average pore diameter of the substrate **3**. When the separation membrane **2** is a zeolite membrane, the arithmetic average of the short diameter and long diameter of an n-membered ring pore, where "n" represents the maximum number of members in the ring of the zeolite, is adopted as the average pore diameter. The term "n-membered ring pore" refers to such a pore that the number of oxygen atoms in a portion in which the oxygen atom are bonded to T atoms to form a ring structure is "n". When the zeolite has a plurality of n-membered ring pores equal to each other in "n", the arithmetic average of the short diameters and long diameters of all the n-membered ring pores is adopted as the average pore diameter of the zeolite. The average pore diameter of the zeolite membrane is determined by the framework structure of the zeolite and may be obtained from a value disclosed in the "Database of Zeolite Structures" of the International Zeolite Association, [online], from the Internet <URL: http://www.iza-structure.org/databases/>.

The thickness of the separation membrane **2** is, for example, from 0.05 $\mu$m to 30 $\mu$m, preferably from 0.1 $\mu$m to 20 $\mu$m, more preferably from 0.5 $\mu$m to 10 $\mu$m. A thicker separation membrane has higher selectivity. A thinner separation membrane increases a permeation rate.

The surface roughness (Ra) of the separation membrane **2** is, for example, 5 $\mu$m or less, preferably 2 $\mu$m or less, more preferably 1 $\mu$m or less, still more preferably 0.5 $\mu$m or less. The surface roughness (Ra) can be measured, for example, in conformity with JIS B 0601.

The separation membrane **2** may be formed by any appropriate method in accordance with a material for forming the membrane. For example, the zeolite membrane may be obtained by: applying zeolite serving as a seed crystal onto a separation membrane; immersing the substrate to which the seed crystal has adhered in a starting material solution; and growing zeolite from the seed crystal serving as a nucleus through hydrothermal synthesis. The starting material solution contains, for example, a silica source, an alumina source, organic matter, an alkali source, or water. A heating temperature in the hydrothermal synthesis is set to, for example, from 60°C to 200°C. A heating time is set to, for example, from 1 hour to 240 hours. In addition, the separation membrane may be formed by using a starting material slurry obtained by mixing an organic binder, a ceramic starting material, and a solvent.

In FIG. **1** to FIG. **5,** one separation membrane complex **10** is exemplified. However, a plurality of separation membrane complexes **10** may be arranged in series in their longitudinal direction to define the first flow path **21** and the second flow path **22**.

B-2. Supply Unit, First Recovery Unit, and Second Recovery Unit

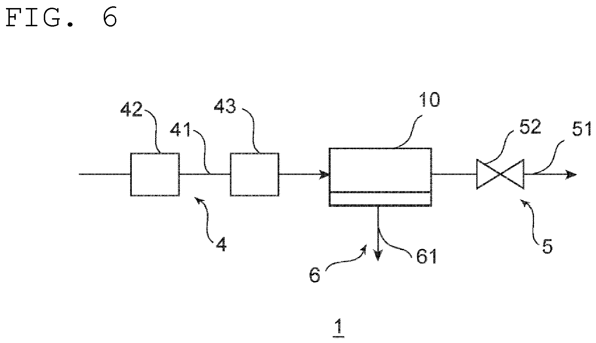

In one embodiment, as illustrated in FIG. **6,** the separation device **1** includes, in addition to the separation membrane complex **10**: a supply unit **4** that supplies a mixture to the first flow path **21** of the separation membrane complex **10;** a first recovery unit **5** that recovers a fluid having passed through the first flow path **21;** and a second recovery unit **6** that recovers a permeate substance that has permeated through the separation membrane **2**. The separation device **1** of the illustrated example is configured so as to be capable of adjusting the temperature, the pressure, and the flow rate of the mixture passing through the first flow path. FIG. **6** is an explanatory diagram for illustrating one embodiment of the present disclosure, and the present disclosure is not limited to this embodiment.

The supply unit **4** of the illustrated example can adjust the temperature and the flow rate of the mixture supplied to (flowing into) the first flow path **21**. The supply unit **4** includes a supply line **41,** a heating device **42,** and a flow rate adjuster **43.**

The supply line **41** is a pipe for supplying the mixture to the first flow path **21**. The upstream end portion of the supply line **41** in the direction of supply of the mixture is connected to, for example, a storage tank that stores the mixture, although not shown. The downstream end portion of the supply line **41** in the direction of supply of the mixture is connected to the inflow port of the first flow path **21** of the separation membrane complex **10** (see FIG. **1).**

The heating device **42** is provided to the supply line **41** and can heat the mixture passing through the supply line **41**. The heating device **42** can have any appropriate configuration.

The flow rate adjuster **43** can adjust the flow rate of the mixture passing through the supply line **41**. The flow rate adjuster **43** can have any appropriate configuration. In the illustrated example, the flow rate adjuster **43** is provided between the heating device **42** and the separation membrane complex **10** in the supply line **41**.

The supply unit **4** may include other devices as required. For example, other devices may be provided between the flow rate adjuster **43** and the separation membrane complex **10** in the supply line **41**.

The first recovery unit **5** of the illustrated example can adjust the pressure of the mixture in the first flow path **21**. The first recovery unit **5** includes a first recovery line **51** and a pressure adjustment valve **52**.

The first recovery line **51** is a pipe through which a fluid (mixture in which the adsorptive substance has been reduced) that has passed through the first flow path **21** of the separation membrane complex **10** is allowed to pass. The upstream end portion of the first recovery line **51** in the direction of passage of the fluid is connected to the outflow port of the first flow path **21** of the separation membrane complex **10** (see FIG. **1).** The downstream end portion of the first recovery line **51** in the direction of passage of the fluid is connected to, for example, a storage tank, although not shown.

The pressure adjustment valve **52** is provided to the first recovery line **51.** The pressure adjustment valve **52** can adjust the opening degree of the first recovery line **51,** and in turn, can adjust the pressure of the mixture in the first flow path **21.**

The second recovery unit **6** of the illustrated example includes a second recovery line **61.**

The second recovery line **61** is a pipe through which a fluid (fluid containing at least a permeate substance) that has passed through the second flow path **22** is allowed to pass from the second flow path **22** of the separation membrane complex **10.** The upstream end portion of the second recovery line **61** in the direction of passage of the fluid is connected to the outflow port of the second flow path **22** of the separation membrane complex **10.** The downstream end portion of the second recovery line **61** in the direction of passage of the fluid is connected to, for example, a storage tank, although not shown.

In the embodiment described above, the supply unit **4** on the upstream side with respect to the separation membrane complex **10** adjusts the temperature and the flow rate of the mixture supplied to (flowing into) the first flow path **21,** and the first recovery unit **5** on the downstream side with respect to the separation membrane complex **10** adjusts the pressure on the mixture in the first flow path **21.** However, the configuration of the separation device **1** is not limited to that described above. The supply unit **4** may be configured so as to be capable of adjusting the pressure on the mixture in the first flow path **21.** Further, the first recovery unit **5** may be configured so as to be capable of adjusting the flow rate of the mixture passing through the first flow path **21.**

C. Details of Operating Method for Separation Device Next, the details of the operating method for the separation device **1** are described.

The operating method for the separation device **1** described above can be used for both of the steady operation of the separation device and a transient operation of the separation device, and is suitably used for, in particular, the transient operation of the separation device.

C-1. Steady Operation

The steady operation of the separation device refers to an operation performed during a period in which the flow rate of the mixture being supplied is larger than zero and the temperature and the pressure of the mixture being supplied are approximately constant. The term "approximately constant" refers to a state in which the inlet temperature and the inlet pressure of the first flow path **21** are not intentionally changed. The fluctuation ranges thereof are not limited to any particular ranges. In terms of controllability, for example, the temperature and the pressure are regarded as being approximately constant when a difference between the maximum value and the minimum value of the temperature in the last one hour is 10°C or less and a difference between the maximum value and the minimum value of the pressure in the last one hour satisfies the following Formula (6).

$$[(\text{Maximum value of the pressure of the mixture in the last one hour/minimum value of the pressure of the mixture in the last one hour})-1]\times100\leq10 \quad (6)$$

In the steady operation of the separation device, for example, the mixture is supplied to the first flow path **21,** the temperature of the mixture being supplied is maintained substantially at the adsorption temperature, and the pressure in the first flow path **21** is maintained substantially constant.

C-2. Transient Operation

The transient operation of the separation device is performed by supplying the mixture to the first flow path and changing the temperature and/or the pressure of the mixture.

In the transient operation of the separation device, typically, a difference between a maximum value and a minimum value of the temperature of the mixture in the last one hour exceeds 10°C, and/or a maximum value and a minimum value of the pressure of the mixture in the last one hour satisfy the following Formula (7).

$$[(\text{Maximum value of the pressure of the mixture in the last one hour/minimum value of the pressure of the mixture in the last one hour})-1]\times100>10 \quad (7)$$

The transient operation of the separation device includes, for example: a first transient operation in which the temperature and/or the pressure of the mixture is increased; and a second transient operation in which the temperature and/or the pressure of the mixture is decreased.

C-2-1. First Transient Operation

In one embodiment, in the first transient operation of the separation device, the mixture is supplied to the first flow path **21** and the temperature of the mixture being supplied and/or the pressure in the first flow path **21** is increased so that the average Reynolds number of the mixture flowing through the first flow path **21** is less than 2,000. More preferably, the temperature of the mixture being supplied is increased, and the pressure in the first flow path **21** is increased. Still more preferably, a step of increasing the temperature of the mixture while maintaining the pressure in the first flow path **21** substantially constant; and a step of increasing the pressure in the first flow path **21** while maintaining the temperature of the mixture substantially constant, are repeated alternately.

As a result, when the mixture having a relatively high temperature flows through the first flow path, heat exchange occurs between the mixture having a relatively high temperature and the separation membrane having a relatively low temperature to thereby efficiently heat the entire separation membrane. Thus, in the first transient operation of the separation device, the entire separation membrane can be efficiently heated. Thus, the temperature of the separation membrane can be stably increased to a predetermined temperature under a state in which the heat distribution in the separation membrane is sufficiently small.

In the illustrated example, the supply unit **4** supplies the mixture to the first flow path **21** at desired temperature and flow rate. Further, the pressure adjustment valve **52** adjusts the opening degree of the first recovery line **51** so that the mixture in the first flow path **21** has a desired pressure.

The flow rate of the mixture passing through the supply line **41** is appropriately and suitably adjusted so that the average Reynolds number of the mixture flowing through the first flow path **21** is less than 2,000. A smaller flow rate of the mixture passing through the supply line **41** is more preferred in the first transient operation of the separation device.

For example, with a general flow path diameter $\Phi$ of 2.4 mm of a monolith type, the flow rate for one hole is 0.02 $Nm^3/h$ or more, and is typically less than 0.1 $Nm^3/h$.

For example, in a tube type or a monolith type with a flow path diameter $\phi$ of 10 mm, the flow rate for one hole is 0.2 $Nm^3/h$ or more, and is typically less than 0.5 $Nm^3/h$.

The above-mentioned flow rates are merely examples and can be changed in accordance with the components of the mixture. The flow rate is not limited to any particular value as long as the average Reynolds number of the mixture flowing through the first flow path is less than 2,000.

Typical examples of the first transient operation of the separation device include a process of starting the operation of the separation device.

The process of starting the operation of the separation device corresponds to a step in which the flow rate of the mixture supplied to the first flow path is changed from zero until the start of the steady operation. In this step, the flow rate of the mixture is larger than zero. The term "zero flow rate" refers to a flow rate being a zero cut (low cut) flow rate or smaller in terms of indicating accuracy of a measurement device.

When the above-mentioned operating method for a separation device is used in the process of starting the operation of the separation device, the temperature of the separation membrane can be stably increased from an initial temperature to the predetermined temperature under a state in which the heat distribution in the separation membrane is sufficiently small.

In the process of starting the operation of the separation device, the initial temperature of the separation membrane is, for example, from 5°C to 25°C, and an initial pressure in the first flow path is, for example, from 0.1 MPaG to 1 MPaG.

At the completion of the process of starting the operation of the separation device, the temperature of the separation membrane is, for example, from 100°C to 350°C, and the pressure in the first flow path is, for example, from 0.1 MPaG to 20 MPaG.

A period in which the first transient operation of the separation device is performed is not limited to the process of starting the operation of the separation device. For example, the first transient operation of the separation device may be performed during the transition from a steady operation in which the mixture has a relatively low temperature and/or pressure to a steady operation in which the mixture has a relatively high temperature and/or pressure.

C-2-2. Second Transient Operation

In one embodiment, in the second transient operation of the separation device, the pressure in the first flow path **21** is decreased and then the temperature of the mixture being supplied is decreased while the mixture is being supplied to the first flow path **21** so that the average Reynolds number of the mixture flowing through the first flow path **21** is less than 2,000.

As a result, when the mixture having a relatively low temperature flows through the first flow path, heat exchange occurs between the mixture having a relatively low temperature and the separation membrane having a relatively high temperature to thereby efficiently cool the entire separation membrane. Thus, in the second transient operation of the separation device, the entire separation membrane can be efficiently cooled. Thus, the temperature of the entire separation membrane can be stably decreased under a state in which the heat distribution in the separation membrane is sufficiently small.

Also in the second transient operation of the separation device, the supply unit **4** and the first recovery unit **5** operate in the same manner as that described above to appropriately adjust the temperature, pressure, and flow rate of the mixture passing through the first flow path. The flow rate in the second transient operation of the separation device is described in the same manner as that for the flow rate in the first transient operation described above.

Typical examples of the second transient operation of the separation device include a process of stopping the operation of the separation device.

The process of stopping the operation of the separation device corresponds to a step from the end of the steady operation described above until the flow rate of the mixture supplied to the first flow path reaches zero.

In the process of stopping the operation of the separation device, the supply of the mixture to the first flow path is stopped to reduce the flow rate of the mixture to zero at the time when the pressure in the first flow path and/or the temperature of the mixture becomes equal to or less than a desired threshold value. In this manner, the process of stopping the operation of the separation device is completed.

When the above-mentioned operating method for a separation device is used in the process of stopping the operation of the separation device, the temperature of the separation membrane **2** can be stably decreased to room temperature (23°C) under a state in which the heat distribution in the separation membrane is sufficiently small.

A period in which the second transient operation of the separation device is performed is not limited to the process of stopping the operation of the separation device. For example, the second transient operation of the separation device may be performed during the transition from a steady operation in which the mixture has a relatively high temperature and/or pressure to a steady operation in which the mixture has a relatively low temperature and/or pressure.

Further, the first transient operation and the second transient operation can be performed successively.

Industrial Applicability

The operating method for a separation device according to the embodiment of the present disclosure is used for the separation of a specific substance in a mixture, in particular, suitably used for the separation of water from a water-containing mixture.

Reference Signs List

**1**     separation device
**2**     separation membrane
**3**     substrate
**21**    first flow path
**22**    second flow path

**Claims**

1. An operating method for a separation device, the separation device including a separation membrane, the separation device including:

   a first flow path to which a mixture is to be supplied; and
   a second flow path through which a substance that has permeated through the separation membrane is allowed to flow,

   the operating method comprising a step of supplying the mixture to the first flow path so that the mixture flowing through the first flow path has an average Reynolds number of less than 2,000.

2. The operating method for a separation device according to claim 1, wherein the mixture contains water.

3. The operating method for a separation device according to claim 2, wherein the mixture contains water and an organic compound.

4. The operating method for a separation device according to any one of claims 1 to 3, wherein the separation membrane is a zeolite membrane.

5. The operating method for a separation device according to claim 4, wherein a molar ratio "$SiO_2/Al_2O_3$" in the zeolite membrane is less than 5.

6. The operating method for a separation device according to any one of claims 1 to 3, wherein, in the step of supplying the mixture to the first flow path, a temperature of the mixture being supplied and/or a pressure in the first flow path is increased.

7. The operating method for a separation device according to any one of claims 1 to 3, wherein, in the step of supplying the mixture to the first flow path, a pressure in the first flow path is decreased, and then a temperature of the mixture being supplied is decreased.

8. The operating method for a separation device according to any one of claims 1 to 3, wherein the operating method for a separation device is used in a transient operation.

FIG. 1

FIG. 2

2

3

FIG. 3

FIG. 4

FIG. 5

FIG. 6

1

# EP 4 691 611 A1

## INTERNATIONAL SEARCH REPORT

| International application No. |
|---|
| **PCT/JP2024/009217** |

### A. CLASSIFICATION OF SUBJECT MATTER

***B01D 61/36***(2006.01)i; ***B01D 71/02***(2006.01)i
FI: B01D61/36; B01D71/02

According to International Patent Classification (IPC) or to both national classification and IPC

### B. FIELDS SEARCHED

Minimum documentation searched (classification system followed by classification symbols)

B01D61/00-71/82, B01D53/22, C02F1/44

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-184362 A (NGK INSULATORS LTD.) 02 October 2014 (2014-10-02) claim 1, paragraphs [0004], [0012]-[0034], fig. 1-8 | 1-4, 6-8 |
| Y | | 5 |
| X | JP 2011-56431 A (HITACHI ZOSEN CORP.) 24 March 2011 (2011-03-24) paragraphs [0017]-[0054], fig. 1-4 | 1-4, 6-8 |
| Y | | 5 |
| Y | WO 2020/261795 A1 (RESEARCH INSTITUTE OF INNOVATIVE TECHNOLOGY FOR THE EARTH) 30 December 2020 (2020-12-30) claim 1, tables 1-3 | 5 |
| A | US 2014/0151303 A1 (BAGATIN, Roberto) 05 June 2014 (2014-06-05) | 1-8 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 May 2024** | **28 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2024/009217**

| Patent document cited in search report | | | Publication date (day/month/year) | Patent family member(s) | | | Publication date (day/month/year) |
|---|---|---|---|---|---|---|---|
| JP | 2014-184362 | A | 02 October 2014 | (Family: none) | | | |
| JP | 2011-56431 | A | 24 March 2011 | US | 2012/0175290 | A1 | |
| | | | | paragraphs [0017]-[0059], fig. 1-4 | | | |
| | | | | US | 2015/0265971 | A1 | |
| | | | | WO | 2011/030691 | A1 | |
| WO | 2020/261795 | A1 | 30 December 2020 | US | 2022/0241732 | A1 | |
| | | | | claim 1, tables 1-3 | | | |
| | | | | CN | 114007725 | A | |
| US | 2014/0151303 | A1 | 05 June 2014 | AU | 2011325178 | A1 | |
| | | | | BR | 112013010698 | A2 | |
| | | | | CA | 2815490 | A1 | |
| | | | | CN | 103249681 | A | |
| | | | | EA | 201390656 | A1 | |
| | | | | EP | 2635536 | A1 | |
| | | | | IT | MI20102061 | A1 | |
| | | | | NZ | 610174 | A | |
| | | | | PL | 2635536 | T3 | |
| | | | | WO | 2012/059553 | A1 | |
| | | | | ZA | 201302552 | B | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Development of Membrane Aided Reactor. *Mitsui Zosen Technical Review*, February 2003, vol. 178, 115-120